Europäisches Patentamt

(19) European Patent Office    (11) Publication number:    **0 179 124**

Office européen des brevets    **B1**

(12)    **EUROPEAN PATENT SPECIFICATION**

(45) Date of publication of patent specification: **26.07.89**    (51) Int. Cl.⁴: **G 02 B 27/00**

(21) Application number: **85902239.4**

(22) Date of filing: **08.04.85**

(86) International application number:
**PCT/US85/00616**

(87) International publication number:
**WO 85/04961 07.11.85 Gazette 85/24**

(54) BINOCULAR HOLOGRAPHIC HELMET MOUNTED DISPLAY.

(30) Priority: **16.04.84 US 600636**

(43) Date of publication of application:
**30.04.86 Bulletin 86/18**

(45) Publication of the grant of the patent:
**26.07.89 Bulletin 89/30**

(84) Designated Contracting States:
**DE FR GB IT NL SE**

(56) References cited:
**GB-A-1 581 926**
**GB-A-1 602 373**
**GB-A-2 006 463**
**GB-A-2 100 466**
**US-A-3 940 204**
**US-A-4 001 499**
**US-A-4 048 653**

(73) Proprietor: **Hughes Aircraft Company**
**7200 Hughes Terrace P.O. Box 45066**
**Los Angeles California 90045-0066 (US)**

(72) Inventor: **MOSS, Gaylord, E.**
**13914 Bora Bora Way**
**Marina Del Rey, CA 90291 (US)**
Inventor: **COHN, Brian, D.**
**440 Bungalow Drive**
**El Segundo, CA 90245 (US)**
Inventor: **CHERN, Mao-Jin, J.**
**28414 Seamount Drive**
**Rancho Palos Verdes, CA (US)**
Inventor: **COOK, Lacy, G.**
**12444 Oxford Avenue**
**Hawthorne, CA 90250 (US)**
Inventor: **FERRER, John, J.**
**9100 Rayford Drive**
**Los Angeles, CA 90045 (US)**

(74) Representative: **Colgan, Stephen James et al**
**CARPMAELS & RANSFORD 43 Bloomsbury**
**Square**
**London WC1A 2RA (GB)**

Courier Press, Leamington Spa, England.

## Description

This invention relates to systems for enhancing the capability of a pilot to successfully operate an aircraft such as an attack helicopter in a low light level environment and, more particularly, to systems providing helmet mounted displays which combine infrared or other image detection and instrumentation symbology in a binocular helmet mounted display.

Various systems are known in the prior art which have been developed to display symbology information or reticle information to an eyepiece for viewing by a pilot. Images from sensors such as radar, forward looking infrared (FLIR), low-light-level television imagery, electrooptical sensors and the like are combined with such information and presented to the pilot eyepiece. A number of such systems are described in an article entitled "Helmet-Mounted Display Interest Revives", Aviation Week & Space Technology, February 24, 1969. Some of these systems rely on binocular type arrangements with image intensifiers for amplifying the light level in the scene viewed by the pilot. Such systems suffer from the disadvantage that the field of view presented to both eyes may not be the same, the image intensifier arrangement is cumbersome and heavy, and the eyepiece(s) constitute an object in front of the pilot's face which is likely to cause injury in the event of impact.

Other systems described in the article incorporate one or a pair of cathode ray tubes which generate images projected through optics for viewing by the pilot. The cathode ray tubes are mounted along the sides of the helmets and may provide the pilot with only a monocular view. In some of these versions, the pilot is required to view the display with one eye through an eyepiece equipped with a rubber cup to shut out ambient light. Variations in light intensity in the scenes presented to the pilot's eyes tend to produce eyestrain and the rubber cup becomes uncomfortable, possibly inducing headaches, in extended use. Furthermore, the viewing of separate images by the two eyes requires substantial training for a pilot to adapt to such an image presentation and tends to be tiring and confusing. Potential confusion or rivalry between displayed information and external background is to be avoided, if possible. The use of partially reflecting mirrors to display the images in front of the pilot's eyes undesirably cuts down on the available light for the outside scene which the pilot views directly. Also the distribution of components of a helmet mounted display is an important consideration, since the moments of inertia with respect to the wearer's spine should be minimized in order to avoid wearer discomfort and fatigue.

A system called "Nighthelm" of Marconi Avionics Limited (c.f. GB—A—2100466) has been developed for use in modern attack helicopters which employ a steerable FLIR sensor to provide night flying imagery together with target sensing capability. The pilot can view the aircraft instruments and the real world through a pair of eyepieces on which are also projected images developed from a pair of image intensifiers situated along the helmet above the eyepiece. By switching to another mode, the pilot may view in one eyepiece an image derived from a cathode ray tube (CRT) which displays FLIR imagery from the remote steerable sensor system. This system does not present images from the CRT to both eyes and thus, in the CRT viewing mode, presents different images to the pilot's eyes. Furthermore, the eyepieces are of heavy thick plastic, and they and the binocular/image intensifier portion of the system present a risk of injury to the pilot upon impact. A further disadvantage of a binocular system is the requirement that the binoculars be adjustable to accommodate the interpupillary dimensions for various users. Thus this system is also subject to many of the problems and disadvantages discussed above.

U.S. Patent 3,940,204 of Withrington discloses the use of holograms in head-up and in helmet mounted displays. The holographic lens of those displays is particularly constructed to correct particular optical aberrations and further compensation is afforded by the use of a relay lens having cylindrical surfaces. The image presented at the visor is monocular.

UK Patent Application No. 2006463A describes a binocular display apparatus for mounting on a helmet to provide binocular images combined with external scenes received through a helmet visor comprising:

an object source device to be mounted on the helmet for providing a display;

beam splitting means for splitting incident light from the object source device into a pair of oppositely directed transverse beams;

a substantially transparent visor for mounting on said helmet and having dual eyepieces oriented at a selected angle, said eyepieces being substantially transparent to permit the helmet wearer to view external scenes therethrough but having the capability of reflecting and collimating light directed thereto from the object source device to project binocular images at respective exit pupils in the vicinity of the helmet wearer's eyes;

bending means located for directing light from the object source device to the splitting means; and

fold means adjacent the splitting means for directing the two light beams from the splitting means toward the respective eyepieces.

According to the present invention, the display is directed generally downward along a forward portion of the helmet; the beam splitting means comprise an X-cube prism having internal surfaces which are partially reflective and partially transmissive to develop the transverse beams from incident light at one external face of the prism; and the bending means comprise an image folding element and a relay lens mounted in succession along the light path between the object source device and the splitting means, wherein said relay lens comprises a triplet of individual lenses separately spaced from each other.

In brief, particular arrangements in accordance with the present invention incorporate an improved type of helmet mounted display which allows the wearer to look through a clear visor and see a virtual image at infinity of a display generated on an object source such as a miniature cathode ray tube (CRT). The invention combines a number of optical elements with the helmet visor as an image display means to achieve a superior display system. The light display which is to be imaged to the view is developed by an object source, which may be for example a CRT, a liquid crystal display, fiber optics or the like. In one particular application of the invention, this object source develops a display which combines the signals from the FLIR sensor mounted in a turret beneath the helicopter with symbology derived from the helicopter instrumentation. The FLIR turret is steerable through a head-tracking control system tied to the helmet.

Next to the object source is an image folding device which may be a prism or a mirror. This is provided for packing purposes, enabling the system to be more compact, and also serves to provide aberration correction.

Following the image folder in the optical path is a relay lens which is used to image the source onto the eyepiece focal surface. This relay lens is preferably a Cooke triplet or a modified triplet. It may incorporate aspheric surfaces on some of the lens elements, but such is not essential. It may be tilted and decentered if desired to accommodate the intended light path and to correct aberrations. The aperture stop may be above, below or within the lens.

Adjacent the exit side of the relay lens is a beam splitting element which serves to divide the light beam out of the relay lens into two beams so that binocular images will be projected for each eye. Preferably in the present invention, the splitting element may be an X-cube prism, but it may also comprise a roof prism or known mirror beam splitters. The X-cube prism is a known element having internal reflective/transmissive surfaces which reflect two light beams laterally in opposite directions from a single incident light beam.

Beam folders in the form of wing mirrors (which may have optical power, if desired) are laterally displaced from the splitting element in order to reflect the transverse beams out of the splitter toward the visor eyepieces.

The eyepieces which form the respective binocular images are preferably in the form of embedded holograms laminated to the surface of a molded integral visor. As an alternative, partially silvered mirrors or CVD gratings might be employed, but the holographic elements are preferred. These serve to collimate the light in order to present a virtual image (for the viewer) at infinity. The two binocular images present a total field-of-view overlap so that both eyes view the same image. In addition, by virtue of the transparent nature of the holographic elements, the visor serves as a combiner whereby the pilot sees not only the displayed images from the object source but also the outside scene in the direction in which he is looking. Because of the one piece, integrated nature of the visor, it is capable of serving in conventional fashion as a protective visor for the helmet wearer, in addition to its function as the display element in the overall display system.

In preferred arrangements in accordance with the invention, the binocular display system includes a particular three-element relay lens configuration employing aspheric surfaces and a cube beam splitter to generate a pair of real images of the miniature head-mounted CRT display. A folding prism is located in the optical path adjacent to the CRT to achieve a suitable positioning of the CRT in the system configuration which minimizes the moment of inertia of the respective display components. This enables the CRT to be mounted close to the helmet and following the profile of the user's head. The visor is an integrated part of the display and provides protection to the user's eyes. It accommodates most of the population of potential users without need for lateral adjustment and offers no visual obscuration to the wearer. The visor is also spaced from the user's face sufficiently to accommodate a pair of glasses worn by the user.

Two reflective holographic elements serving as eyepieces are located on the protective visor and transform the real CRT images from the beam splitter into a pair of identical virtual images at infinite distance which are then viewed by both eyes. Because the holograms are almost transparent, the displayed imagery appears superimposed on the outside scene. The helmet visor display of the present invention provides a field of view which is 30° in elevation by 40° in azimuth with full overlap between the two image fields displayed on the visor. The visor holographic elements form combiners which introduce a bend angle in the rays from the CRT so that the optical path runs parallel to the forehead and as close to the head as is feasible, considering the space needed for padding inside the helmet.

In one particular embodiment, this configuration results in a 58° bend angle at the visor and a depression of the vertical field by 5° relative to the user horizontal. This depression is acceptable for attack helicopter use, since in field operation most targets are below the helicopter. After the CRT light is divided in the cube beam splitter, the resulting two beams are reflected by laterally disposed wing mirrors and then directed to the visor holographic elements. The display field of view is closely matched to the normal horizontal field of view. The optical system develops an exit pupil which is 15 mm wide by 10 mm high, located 90 mm from the combiner. The centers of the left and right exit pupils are 62.5 mm apart. The exit pupil size is large enough to accommodate the interpupillary separations of 90% of the population; that is, the separations of the fifth through the ninety-fifth percentiles of the population. Thus the need for providing adjustability of the viewing elements is eliminated and the goal of an integrated molded visor affording maximum protection of the wearer against the effects of object impact is achieved.

The selection and arrangement of optical elements of the system serve to compensate for inherent aberrations in certain components. Specifically, the tilt of the relay lens assembly and the wedge in the folding prism correct for the axial coma which is introduced by the off axis holographic eyepiece elements. It is desirable that all elements of the relay lens have a common axis in order to minimize the alignment complexity of the relay lens.

In one preferred embodiment of the invention, the relay lens is essentially a variant of a Cooke triplet with aspheric surfaces. In a production environment, wherein the lens elements are formed of injection molded plastic, the aspheric surfaces are readily fabricated and this allows the relay lens (such as a Cooke triplet) to have fewer elements than comparable prior art systems. The relay lens may incorporate a spectral filter where needed in order to eliminate spurious blue and red images developing from spikes in certain CRT phosphors.

The preferred embodiment utilizes a 3/4-inch CRT display utilizing a P-43 phosphor having a spectral peak at 543 nanometers, the same wavelengths to which the holograms are tuned. The folding prism is constructed so that the CRT centerline points to the left and slightly forward while lying in a plane that is largely horizontal. This configuration was chosen in order to simplify the design for the housing of the CRT. The relay lens, following the folding prism, comprises three elements (plus the spectral filter) all having a common axis. Where a filter is not necessary, it may be replaced by a clear piece of glass.

The relay lens is followed by an X-cube prism, which is a set of four right-angled prisms joined in a cube to split the light which forms two images from the incident CRT source. These are then reflected by associated laterally-disposed wing mirrors to direct the images to the holographic elements in the visor. These in turn reflect the images through the bend angle at the visor, collimate the beams and direct the images to the pilot's eyes with the specified exit pupil.

Thus, helmet mounted display systems in accordance with the present invention present substantial improvements over helmet mounted displays which are known in the prior art. The hologram elements on the visor are virtually transparent and present no visual obscuration of the field of view. There is true binocular display of the images to both eyes from a single light source, with complete overlap of the two images. Rather than being a potential hazard to the wearer in the event of impact, as with the binocular of FLIR systems which mount heavy lenses, framework, etc., in front of the eyes, the integrated visor of the present system which is molded in one piece of tough lightweight plastic can withstand substantial impact forces and provides eye protection. The display system is extremely compact and lightweight, and the heavier components of the system are mounted symmetrically close to the wearer's head, thereby minimizing both the weight and the inertial moment of the overall display which is added to the helmet.

The holograms utilized in the present invention are developed in thin gelatin layers which are laminated on the integrated molded visor. The holograms are virtually transparent, thus developing a high see-through capability, and also provide a high reflection efficiency for the CRT images by virtue of the coordination of their wavelength characteristics to the particular properties of the CRT phosphor.

A better understanding of the present invention may be had from a consideration of the following detailed description, taken in conjunction with the accompanying drawing in which:

Fig. 1 is a block diagram illustrating the various elements of the display system of the present invention and the light paths therein;

Fig. 2 is a schematic diagram of one particular arrangement of the present invention, showing the relation of the helmet mounted display to the user's head;

Fig. 3 is a schematic diagram illustrating various details of the elements making up the arrangement of Fig. 2; and

Fig. 4 is an orthogonal view of the arrangement of Fig. 3, showing the binocular use of the display.

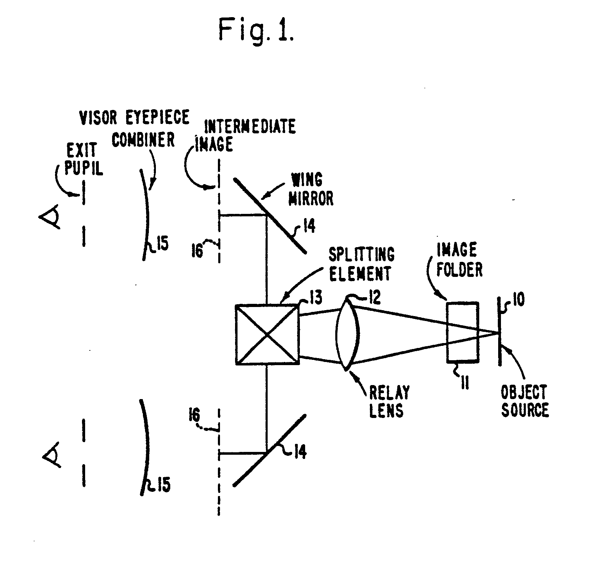

The general arrangement of the present invention is illustrated schematically in the block diagram of Fig. 1. In this figure, light is shown emanating from an object source 10, which may be a CRT, and directed by an image folder 11 via a relay lens 12 to a splitting element 13. (The beam path from the source to the image folder is shown unfolded in the drawings for convenience of illustration). The incident light is then split into two beams by the splitting element 13 which directs the beams laterally to a pair of folding members, shown in the form of wing mirrors 14 which redirect the two beams toward respective eyepieces, shown as the holographic elements of the visor 15, which collimate the light, redirect the beams toward the user's eyes, and form the exit pupil indicated. Each eye views the image at the corresponding exit pupil as a virtual image at infinity. The intermediate images, represented by the broken lines 16, are developed between the relay lens 12 and the visor 15.

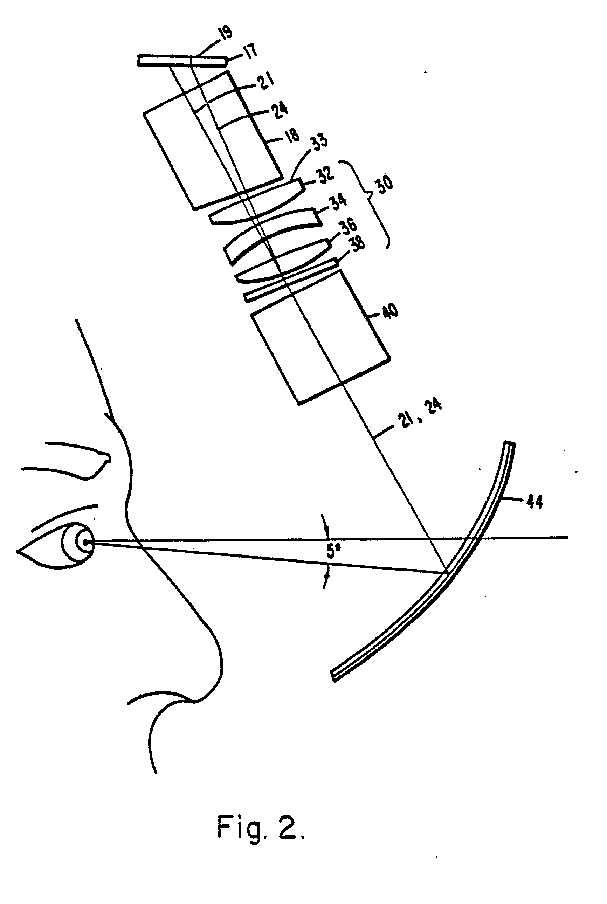

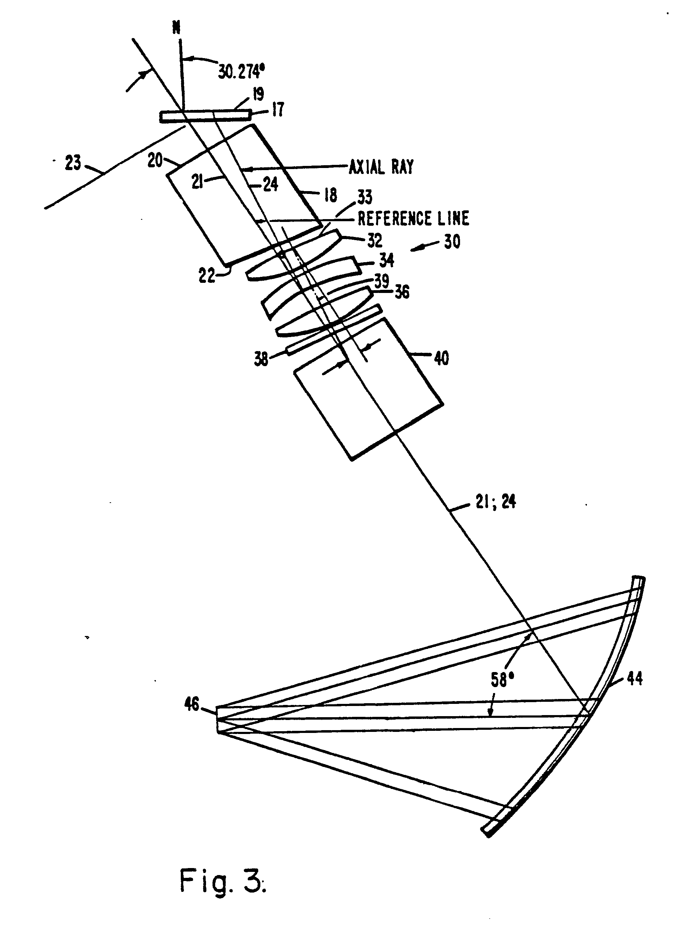

The preferred embodiment is represented schematically in further detail in Figs. 2—4. The arrangement of the principal elements of the binocular system of the invention is shown in Fig. 2 in relation to the wearer's head (the helmet has been omitted for simplicity). The binocular display system is shown comprising a miniature cathode ray tube having a flat plate display element 17 bearing a phosphor on its inner surface 19. A fiber optic face plate, flat or curved as desired, might be used instead. As indicated in Fig. 3, the normal to the CRT plate 17 is aligned at 30.274° to the reference line 21 of the system.

Next to the CRT plate 17 is a folding prism 18. The entrance face 20 of the prism 18 is orthogonal to the reference line 21 (and thus at 30.274° to the plane of the CRT plate 17) while the exit face 22 is at a wedge angle of 8.36°. The light from the cathode ray tube is internally reflected within the prism 18 which is spaced so that the entrance face 20 is located at a point 8.86 mm (0.349 inch) from a zero reference line 23, which is orthogonal to the reference line 21 at the outer surface of the CRT face plate 17.

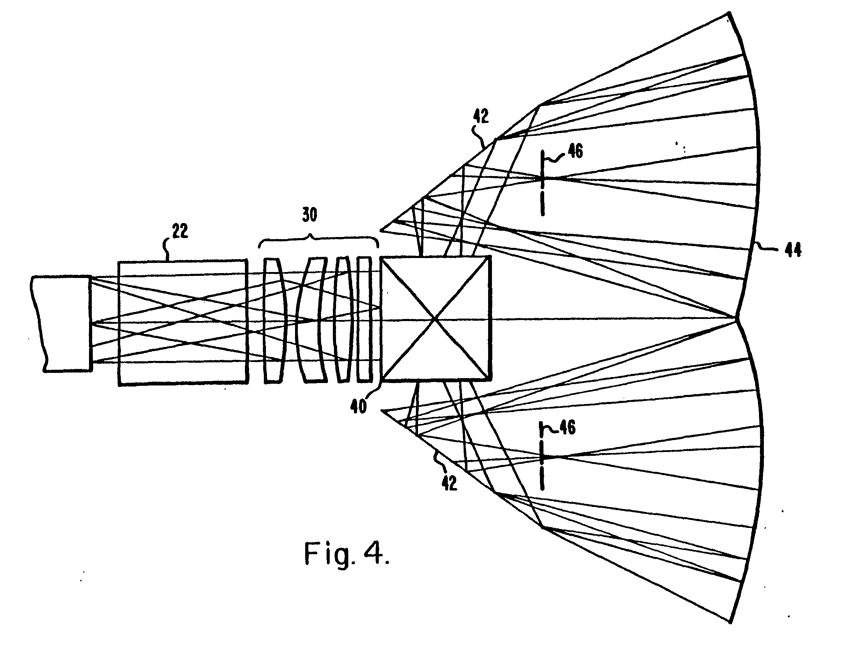

Next to the folding prism 18 is the relay lens 30 comprising three lenses 32, 34 and 36 in a modified Cooke triplet, together with a spectral filter 38. The two outer lenses 32 and 36 of the triplet have aspheric surfaces while the intermediate lens 34 is a meniscus lens with spherical surfaces. The mounting of the relay lens off-axis serves to bend the axial ray 24 into coincidence with the reference line 21. The light transmitted by the relay lens 30 is then directed to an X-cube prism 40, better shown in Fig. 4, where it is split into a pair of laterally directed images which are reflected by wing mirrors 42 on opposite sides of the X-cube prism 40 and sent to the visor/eyepiece/combiner 44. Rays from a particular field point are collimated by the combiner 44 and an exit pupil is formed at 46 (represented by the broken lines 46 in Fig. 4).

The view in Fig. 4 is taken from the upper right of Fig. 2, parallel to the reference line 21 and the aligned faces of the folding prism 18 and X-cube prism 40. For simplicity, the wing mirrors 42 are not shown in the views of Figs. 2 and 3.

As indicated in Fig. 3, the aspheric lens 32 is mounted such that the point at which its upper surface 33 is intersected by the axial ray 24 is located 41.55 mm (1.636 inches) from the zero reference line 23. The upper face of the X-cube prism 40 is 2.716 inches from the zero reference line 23, while the point at which the reflected axial ray 24 exits the combiner 44 is positioned 184.1 mm (7.248 inches) from the zero reference line 23. The combiner 44 is oriented such that its element axis in the plane of Fig. 3 forms an angle of 30.24° with the path of the axial ray exiting the combiner 44 (extending in the direction of the exit pupil 46).

The location of the wing mirrors 42 relative to the combiner 44 is limited by a requirement for a 35° see-through look-up capability and necessary head clearance (see Fig. 2). This in turn fixes the location of the X-cube prism 40. First order and packaging considerations (especially the need for a long back focus to allow the inclusion of the fold prism 22) dictate that the aperture stop (of which the exit pupil 46 is an image) fall slightly above the X-cube prism 40. This is also one of the positions of the aperture stop for which the relay lens 30 can most readily be designed for superior performance. However, with minor modification of the design, the stop may be located above or within the relay lens 30, if desired. Sufficient eye relief has been incorporated into the display system to allow the user to wear glasses and a standard oxygen mask. Given the eye relief and aperture stop location desired, the focal length of the combiner 44 and the magnification of the relay lens 30 are readily determinable. Because the user looks through the visor 44, see-through distortion is carefully controlled. Also, particular care has been taken in the design of the preferred embodiment to insure that there is minimal see-through variation when crossing the border of the combiner 44.

The axis of the relay lens 30 comprising the elements 32, 34, 36 and 38 (represented by the dot-dash line 39) is at an angle of 5.29° to the reference line 21; and the point at which the axis 39 intersects the surface 33 of the lens 32 is displaced from the reference line 21 by 3.28 mm (0.129 inch).

A summary of the optical characteristics of the particular embodiment of the present invention depicted in Figs. 2—4 is set forth in the following Table I:

TABLE I

| Parameter | Value |
| --- | --- |
| System | |
| Horizontal field of view | 40° |
| Vertical field of view | 30° |
| Exit pupil width | 15 mm |
| Exit pupil height | 10 mm |
| Effective focal length | 26.7 mm |
| Horizontal f-number | 1.77 |
| Vertical f-number | 2.70 |
| CRT diameter | 19.0 mm |
| Exit pupil separation | 62.5 mm |
| Wavelength | 543.0 nm |
| Internal | |
| Combiner focal length | 50.8 mm |
| Combiner f-number | 3.4 |
| Combiner bend angle | 58° |
| Relay lens f-number | 1.1 |
| Relay lens field of view | 30° |
| Approximate relay lens width | 26 mm |

A layout similar to that shown in Fig. 3 is appropriate if a fiber face plate CRT is substituted for the glass face plate 17 which is shown. In such a case, however, the spacing and alignment of the elements 18, 32, 34, 36, 38 and 40 would be adjusted slightly to account for the fact that the image is developed at the outer face of the CRT instead of the inner surface 19 as indicated in Fig. 3.

It will be apparent to those skilled in the art that the various parameters set forth hereinabove with respect to the particular embodiment depicted in Figs. 2—4 are selected in accordance with acceptable design principles. Other parameters of the system, not specified, such as the prescriptions for the lens surfaces of the elements in the relay lens 30, may be chosen in accordance with such principles. These principles are well known to those skilled in the art and may be found in any good textbook on optical engineering. One such text is "Modern Optical Engineering" by Warren J. Smith (McGraw-Hill, Inc. 1966).

There has thus been shown and described hereinabove an improved type of helmet mounted display which allows the wearer to look through a clear visor and see a virtual image at infinity of a display generated on a miniature CRT. This is of particular utility where movement of the helmet is used to control the direction of a FLIR sensor turret from which the portion of the CRT image representing the external scene is derived. All of the elements making up the display system, with the sole exception of the combiner which constitutes the helmet visor, are mounted on the helmet out of the field of view and away from any position where they might cause injury to the user. The present display, particularly the helmet visor, is compatible with on board life support systems, such as the pilot's spectacles, oxygen mask, etc. The incorporation of the X-cube splitter in combination with the integrated visor achieves added protection against impact for the pilot with improved compactness, reduction in weight, and minimal moment of inertia of the helmet mounted display. As compared with known prior art systems, the binocular system of the present invention establishes a larger field of view, a larger exit pupil, improved resolution, a complete binocular scene overlap to each eye and a normal viewing field. Moreover, the display system develops easy adaptability of the user with a minimum of instruction and training being required. The result is an enhancement of the safety and effectiveness of operation of helicopters or other aircraft in which such a system may be installed.

## Claims

1. Binocular display apparatus for mounting on a helmet to provide binocular images combined with external scenes received through a helmet visor comprising:
an object source device (10) to be mounted on the helmet for providing a display;
beam splitting means (13) for splitting incident light from the object source device into a pair of oppositely directed transverse beams;
a substantially transparent visor (15, 44) for mounting on said helmet and having dual eyepieces (44) oriented at a selected angle, said eyepieces being substantially transparent to permit the helmet wearer to view external scenes therethrough but having the capability of reflecting and collimating light directed thereto from the object source device to project binocular images at respective exit pupils in the vicinity of the helmet wearer's eyes;
bending means located for directing light from the object source device to the splitting means; and
fold means (14) adjacent the splitting means for directing the two light beams from the splitting means toward the respective eyepieces; characterised in that:
the display is directed generally downward along a forward portion of the helmet; in that the beam splitting means comprise an X-cube prism having internal surfaces which are partially reflective and partially transmissive to develop the transverse beams from incident light at one external face of the prism; and in that
the bending means comprise an image folding element (11) and a relay lens (12) mounted in succession along the light path between the object source device and the splitting means, wherein said relay lens comprises a triplet of individual lenses (32, 34, 36) separately spaced from each other.

2. Apparatus according to claim 1 wherein the triplet of lenses comprises first (32) and third (36) lenses having aspheric surfaces and an intermediate meniscus lens (34) having spherical surfaces.

3. Apparatus according to claim 1 or 2 wherein the visor eyepieces (44) comprise thin surface elements laminated respectively to the right and left portions of the visor (15) and having holograms embedded therein, wherein the object source device (10) is a cathode ray tube and wherein said holograms are fabricated to have a tuned wavelength matching the phosphor of the cathode ray tube.

4. Apparatus according to any of claims 1 to 3 wherein the visor (15) is a unitary molded plastic member having respective right and left viewing portions shaped to develop a focusing effect for light reflected from a partially reflective surface thereof such that said visor (15) is mounted at a selected angle relative to the axial ray of the light beams incident thereon to develop a fold angle for said light beams suitable for projecting the light beams toward the eyes of a wearer of the helmet with said eyepieces (44) comprising thin surface elements laminated respectively to the right and left portions of the visor (15) and having holograms embedded therein.

5. Apparatus according to any one of the preceding claims wherein the visor (15) is mounted at an angle in the vertical plane such that a bend angle in excess of 50° is developed in the axial ray of the projected image.

6. Apparatus according to any one of the preceding claims wherein said image folding element (11) comprises a folding prism (18, 22).

7. Apparatus according to any one of the preceding claims, further comprising a pair of wing mirrors (14) mounted on opposite sides of the X-cube prism (13, 40) for reflecting the split beams toward the visor (15).

8. Apparatus according to claim 7 wherein the relay lens (12) and the folding prism (18, 22) are displaced in a vertical plane from a reference line (21) which is in the same plane as and mid-way between the axial rays of the split beams as they are projected on the visor (15).

9. Apparatus according to claim 8 wherein the axis of the relay lens (12, 30) is angularly displaced from the reference line (21) by a predetermined angle.

10. Apparatus according to any one of the preceding claims wherein the relay lens (12, 30) further includes a spectral filter (38) following said triplet.

11. Apparatus according to any one of the preceding claims wherein the exit pupil of each of the dual images reflected from the visor (15) at a plane 90 mm distant from the combiner (44) as measured along the axial ray of the projected image is 15 mm wide and 10 mm high.

12. Apparatus according to claim 11 wherein the dimensions of the exit pupils and the distance between the eyepieces are selected to accommodate approximately 90% of the general population of users.

**Patentansprüche**

1. Binokulare Anzeigenvorrichtung zum Befestigen an einem Helm zum Erzeugen von binokularen Bildern, die mit einem, durch ein Helmvisier empfangenen, äußeren Bild überlagert werden, mit:
einer Objektquellenvorrichtung (10) zum Befestigen an dem Helm und zur Erzeugung eines Bildes;
Strahlteilervorrichtungen (13) zum Aufteilen des einfallenden Lichtes der Objektquellenvorrichtung in ein Paar von entgegengesetzt gerichteten, transversalen Strahlen;
einem im wesentlichen transparenten Visier (15, 44) zum Befestigen an dem Helm und mit einem, in einem bestimmten Winkel angebrachten, Doppelokular (44);
wobei das Okular im wesentlichen transparent ist, um dem Helmträger des Beobachten eines externen Bildes hierdurch zu erlauben, aber die Eigenschaft hat, das von der Objektquellenvorrichtung dorthin geleitete Licht zu reflektieren und kollimieren, um binokulare Bilder zu den jeweiligen Austrittspupillen in der Nähe der Augen des Helmträgers zu projizieren;
Lenkvorrichtungen, die zum Leiten des Lichts von der Objektquellenvorrichtung zu der Strahlteilervorrichtung angebracht sind; und
Faltvorrichtungen (14), die an den Strahlteilervorrichtungen angrenzend zum Leiten der zwei Lichtstrahlen von den Strahlteilervorrichtungen zu dem jeweiligen Okular angebracht sind, dadurch gekennzeichnet, daß
die Anzeige entlang eines Vorderteils des Helms im wesentlichen nach unten gerichtet ist; daß
die Strahlteilervorrichtungen ein X-Würfelprisma mit interne Oberflächen aufweisen, die partiell reflektierend und partiell durchlässig sind, um die transversalen Strahlen aus dem einfallenden Licht an einer äußeren Fläche des Prismas auszubilden; und daß
die Lenkvorrichtungen ein Bildfaltelement (11) und eine Relaislinse (12) enthalten, die hintereinander entlang des Lichtweges zwischen der Objektquellenvorrichtung und den Strahlteilervorrichtungen angeordnet sind, worin die Relaislinse ein Triplet aus einzelnen Linsen (32, 46, 36) enthält, die räumlich separat zueinander angeordnet sind.

2. Vorrichtung nach Anspruch 1, worin das Linsentriplet eine erste (32) und eine dritte Linse (36) mit asphärischen Oberflächen und eine dazwischenliegende Meniskuslinse (34) mit sphärischen Oberflächen beinhaltet.

3. Vorrichtung nach Anspruch 1 oder 2, worin das Visierokular (44) dünne Oberflächenelemente enthält, die auf dem jeweiligen rechten und linken Teil des Visiers (15) geschichtet sind und eingebettete Hologramme enthalten, wobei die Objektquellenvorrichtung (10) eine Kathodenstrahlröhre ist und die Hologramme so hergestellt sind, daß sie eine abgestimmte Wellenlänge haben, die auf den Phosphor der Kathodenstrahlröhre abgestimmt ist.

4. Vorrichtung nach einem der Ansprüche 1 bis 3, worin das Visier (15) ein einstückig gegossener Plastikkörper ist, mit einem jeweiligen rechten und linken Sichtteil, die so ausgebildet sind, daß ein Fokussiereffekt für von ihrer partiell reflektierenden Oberfläche reflektierte Lichtstrahlen derart eintritt, daß das Visier (15) in einem bestimmten Winkel zu dem Axialstrahl der auf es einfallenden Lichtstrahlen angeordnet ist, um einen entsprechenden Faltwinkel der Lichtstrahlen, geeignet zum Projizieren der Lichtstrahlen zu den Augen des Helmträgers zu ermöglichen, wobei das Okular (44) dünne Oberflächenelemente enthält, die auf dem jeweiligen rechten und linken Teil des Visiers (15) geschichtet sind und eingebettete Hologramme enthalten.

5. Vorrichtung nach einem der vorhergehenden Ansprüche, worin das Visier (15) in einem Winkel der vertikalen Ebene so angeordnet ist, daß ein Krümmungswinkel von mehr als 50° zwischen dem Axialstrahl und dem projizierten Bild entsteht.

6. Vorrichtung nach einem der vorhergehenden Ansprüche, worin das Bildfaltelement (11) ein Faltprisma (18, 22) enthält.

7. Vorrichtung nach einem der vorhergehenden Ansprüche, die ferner ein Paar von Flügelspiegeln (14) enthält, die an entgegengesetzten Seiten des X-Würfelprismas (13, 40) zum Reflektieren der aufgeteilten Strahlen zum Visier (15) angebracht sind.

8. Vorrichtung nach Anspruch 7, worin die Relaislinse (12) und das Faltprisma (18, 22) in einer vertikalen Ebene von einer Referenzlinie (21) versetzt sind, die in der selben Ebene und auf halber Strecke zwischen den Axialstrahlen der aufgeteilten Strahlen liegt, die auf das Visier (15) projiziert werden.

9. Vorrichtung nach Anspruch 8, worin die Achse der Relaislinse (12, 30) von der Referenzlinie (21) um einen vorbestimmten Winkel versetzt ist.

10. Vorrichtung nach einem der vorhergehenden Ansprüche, worin die Relaislinse (12, 30) ferner ein Spektralfilter (38) enthält, das hinter dem Triplet angeordnet ist.

11. Vorrichtung nach einem der vorhergegangenen Ansprüche, worin die Austrittspupille von jedem der beiden vom Visier (15) reflektierten Bilder in einer, vom Kombinierer 90 mm entfernten, entlang des Axialstrahls der projizierten Bilder gemessenen Ebene, 15 mm breit und 10 mm hoch ist.

12. Vorrichtung nach Anspruch 11, worin die Dimension der Austrittspupillen und die Entfernung zwischen den Okularen so gewählt ist, daß sie auf ungefähr 90% der Benutzer abgestimmt ist.

## Revendications

1. Dispositif de visualisation binoculaire destiné à être monté sur un casque pour fournir des images binoculaires combinées avec des scènes extérieures reçues à travers une visière de casque comprenant:
—un dispositif de source objet (10) destiné à être monté sur le casque pour fournir une visualisation;
—des moyens diviseurs de faisceau (13) pour diviser de la lumière incidente provenant du dispositif de source objet en une paire de faisceaux transversaux dirigés en sens opposés;
—une visière (15, 44) sensiblement transparent destinée à être montée sur ledit casque et comportant des oculaires jumelés (44) orientés suivant un angle choisi, lesdits oculaires étant sensiblement transparents pour permettre au porteur du casque de voir des scènes externes à travers ce dernier mais ayant la capacité de réfléchir et d'effectuer la collimation de la lumière dirigée vers eux en provenance du dispositif de source objet pour projeter des images binoculaires à des pupilles de sortie respectives au voisinage des yeux du porteur de casque;
—des moyens d'inflexion placés pour diriger la lumière provenant du dispositif de source objet vers les moyens diviseurs; et
—des moyens de rabattement (14) adjacents aux moyens diviseurs pour diriger les deux faisceaux lumineux provenant des moyens diviseurs vers les oculaires respectifs; caractérisé en ce que:
—la visualisation est généralement dirigée de haut en bas le long d'une partie avant du casque; en ce que les moyens diviseurs de faisceau comprennent un prisme en cube-X comportant des surfaces internes qui sont partiellement réfléchissantes et partiellement transmetteuses pour développer les faisceaux transversaux issus de la lumière incidente à une face externe du prisme; et en ce que
—les moyens d'inflexion comprennent un élément rabatteur d'image (11) et une lentille relais (12) montés successivement le long du trajet lumineux entre le dispositif de source objet et les moyens diviseurs; ladite lentille de relais comprenant un triplet de lentilles individuelles (32, 34, 36) espacées séparément l'une de l'autre.

2. Dispositif selon la revendication 1, dans lequel le triplet de lentilles comprend des première (32) et troisième (36) lentilles ayant des surfaces asphériques et une lentille ménisque intermédiaire (34) ayant des surfaces sphériques.

3. Dispositif selon l'une des revendications 1 et 2, dans lequel les oculaires (44) de visière comprennent des éléments de surface fins feuilletés respectivement aux parties droite et gauche de la visière (15), dans lesquels sont noyés des hologrammes, le dispositif de source objet (10) étant un tube à rayon cathodique tandis que lesdits hologrammes sont réalisés pour présenter une longueur d'onde accordée s'adaptant à la substance phosphorescente du tube à rayon cathodique.

4. Dispositif selon l'une quelconque des revendications 1 à 3 dans lequel la visière (15) est une pièce unitaire moulée en plastique comportant des parties de vision respectives droite et gauche formées pour développer un effet focalisant pour la lumière réfléchie par une surface partiellement réfléchissante de ces dernières de sorte que ladite visière est montée suivant un angle choisi par rapport au rayon axial des faisceaux lumineux incident sur cette dernière pour donner auxdits faisceaux lumineux un angle de rabattement approprié pour projeter les faisceaux lumineux vers les yeux d'un porteur du casque, lesdits oculaires (44) comprenant des éléments de surface fins feuilletés respectivement aux parties droite et gauche de la visière (15), dans lesquels sont noyés des hologrammes.

5. Dispositif selon l'une quelconque des revendications précédentes, dans lequel la visière (15) est montée suivant un angle dans le plan vertical tel que le rayon axial de l'image projetée forme un angle d'inflexion supérieur à 50°.

6. Dispositif selon l'une quelconque des revendications précédentes, dans lequel ledit élément de rabattement d'image (11) comprend un prisme de rabattement (18, 22).

7. Dispositif selon l'une quelconque des revendications précédentes, comprenant en outre une paire de miroirs d'aile (14) montés sur les côtés opposés du prisme (13, 40) en cube-X pour réfléchir les faisceaux divisés vers la visière (15).

8. Dispositif selon la revendication 7, dans lequel la lentille relais (12) et le prisme de rabattement (18, 22) sont décalés dans un plan vertical par rapport à une ligne de référence (21) qui est dans le même plan et à mi-chemin entre les rayons axiaux des faisceaux divisés tels qu'ils sont projetés sur la visière (15).

9. Dispositif selon la revendication 8, dans lequel l'axe de la lentille relais (12, 30) est décalé angulairement d'un angle prédéterminé par rapport à la ligne de référence (21).

10. Dispositif selon l'une quelconque des revendications précédentes, dans lequel la lentille relais (12, 30) comprend en outre un filtre spectral (38) à la suite dudit triplet.

11. Dispositif selon l'une quelconque des revendications précédentes, dans lequel la pupille de sortie de chacune des images jumelées réfléchies par la visière (15) en un plan situé à une distance de 90 mm du combinateur (44) telle que mesurée le long du rayon axial de l'image projetée est large de 15 mm et haute de 10 mm.

12. Dispositif selon la revendication 11, dans lequel les dimensions des pupilles de sortie et la distance entre les oculaires sont choisies pour s'adapter à approximativement 90% de la population générale d'utilisateurs.

# Fig. 1.

Fig. 2.

EP 0 179 124 B1

Fig. 3.

3

Fig. 4.